# EUROPEAN PATENT APPLICATION

(11) **EP 3 872 676 A1**
(43) Date of publication of application: **01.09.2021**
(21) Application number: 21020204.0
(22) Date of filing: 15.10.2019
(51) Int. Cl.: G06F 40/279, G06F 40/205, G06F 16/907, G06F 40/30

(54) **COMPUTER-IMPLEMENTED METHOD FOR BIG DATA ANALYSIS AND IDENTIFYING SEMANTICS IN HETEROGENEOUS RAW DATA**

(30) Priority: 15.10.2018 US 201862745773 P
(62) Divisional of application: 19795466.2
(71) Applicant: Zoe Life Technologies Holding AG, 9100 Herisau (CH)
(72) Inventor: Schloer, Hardy Frank, 80331 München (DE)
(74) Representative: Reich, Jochen

(57) **Abstract**

The present invention is directed towards a computer-implemented method for big data analysis and identifying semantics in heterogeneous raw data.

## Description

### Introduction

In the industry of data mining, algorithms that detect physical objects are currently in development. Some quite effective, but most work on visual data, that is, on images. From face recognition to pedestrian and vehicle recognition in self-driving cars, the detection of physical objects is primarily related to visual information and visual analytics.

### The Invention

The present invention as defined in the appended claims detects representations of physical objects in text, stores them in a particular type of database, and allows simplified retrieval and abstraction of said physical objects. The simplified retrieval and abstraction facilitates the drawing of inferences regarding properties and behavior of a particular object from consideration of other properties and behaviors of that object and from references to that object and associations related to that object.

A physical object, in our definition, is a material thing, real or perceived through abstract understanding. A physical object is an abstract or material object, other than what is determined to be a "Person". A Person is a category distinct from physical objects, although sharing many of the same qualities. In the present invention, we detect physical objects in text data, through corpus linguistics and text mining techniques.

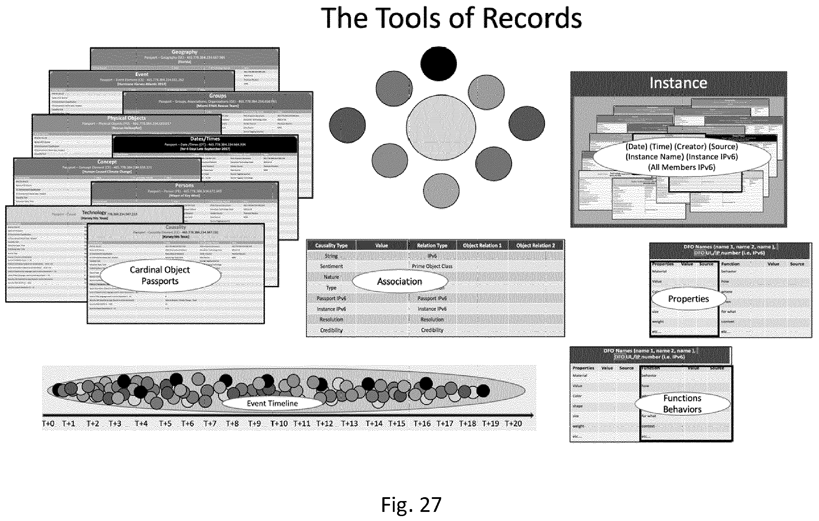

Refer to Fig. 27: 1C+8 tools of Records.

We utilize existing techniques of Part of Speech ("PoS") tagging as well as Word Category Disambiguation ("WCD"). PoS is a set of text processing methods through which words and phrases are tagged is being parts of speech, based on the syntactic context of the words in question. Methods of PoS are well known to experts in the field of computational linguistics and are not claimed as novel per se.

The challenge with physical object recognition, in this sense, from arbitrary textual material is that it also requires Word Sense Disambiguation ("WSD") and Named Entity Disambiguation (NED), in addition to WCD. Thus, the method used in the present invention combines PoS, WSD and NED.

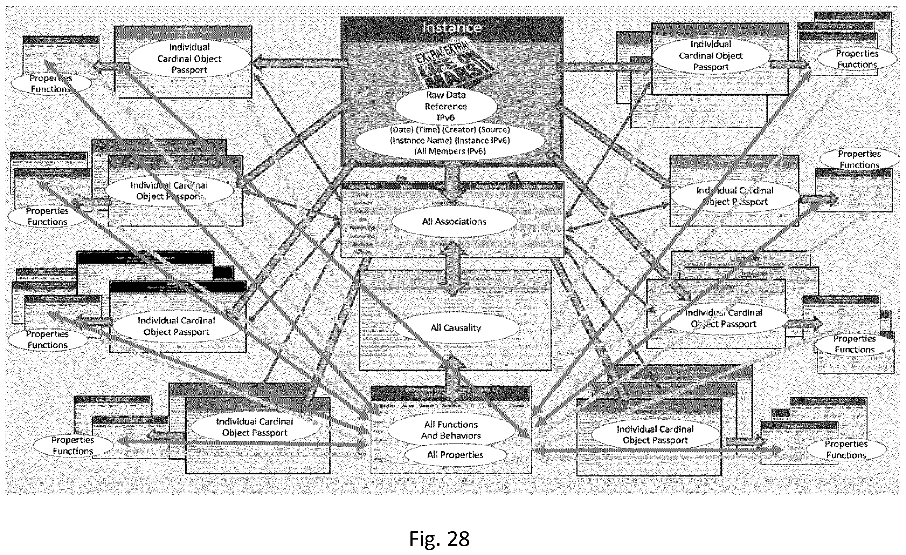

Refer to Fig. 28: Turning text into C+8 Objects.

The approach of the present invention is based on the observation that physical objects are expressed in natural language text through nouns. In linguistic PoS analysis, nouns are words used to refer to persons, places, or things. Common nouns are nouns that are not the name of any particular person, place, or things. That is, common nouns usually refer to categories or types of objects, rather than a particular specified object. It is commonplace in linguistics to refer to singular common nouns as NN and plural common nouns as NNS. Proper nouns, in contrast, refer to specific, individual items.

The method of the present invention creates symbolic objects from text, and assigns properties to those objects. In particular, when the PoS textual analysis returns a textual object recognized as a common noun, a part of speech property tag is attached to said textual object, identifying it as NN or NNS.

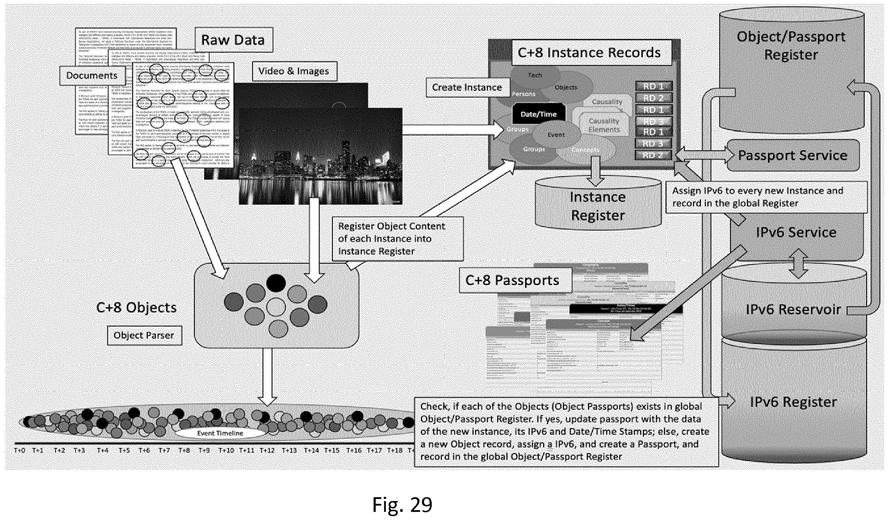

Refer to Fig. 29.

An example will help clarify the method here. Consider the sentence *"The engine of my Ford Focus broke down a few blocks away.* " Using standard linguistic techniques, this would be tagged as:
The </DT> **engine**</NN> of</IN> my</PRP$> Ford</NNP> Focus</NNP> broke</VBD> down</RP> a</DT> few</JJ> **blocks</NNS>** away</RB> .</.>

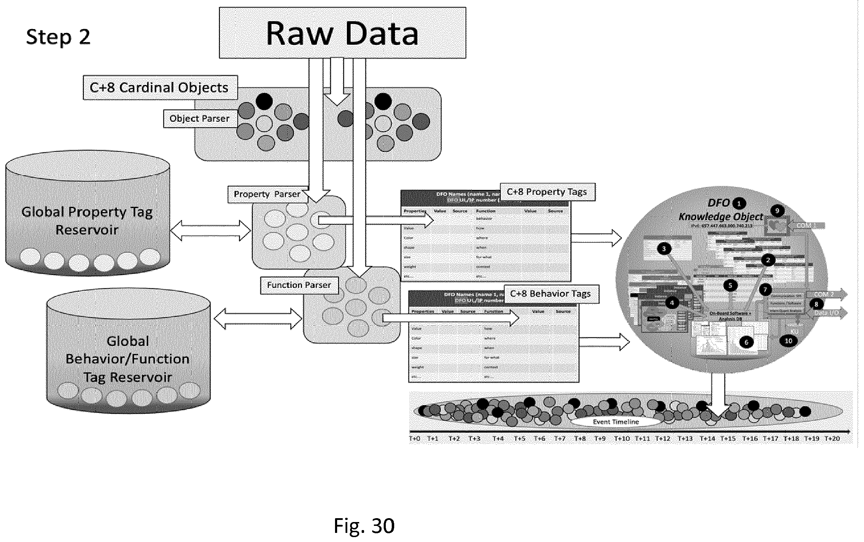

Refer to Fig. 30.

Where "engine" is identified as a singular common noun and "blocks" is identified as a plural common noun. Ford and Focus are identified as singular proper nouns, not yet determined as to their details tagging. The tagging of other parts of speech is used for context analysis and for other purposes.

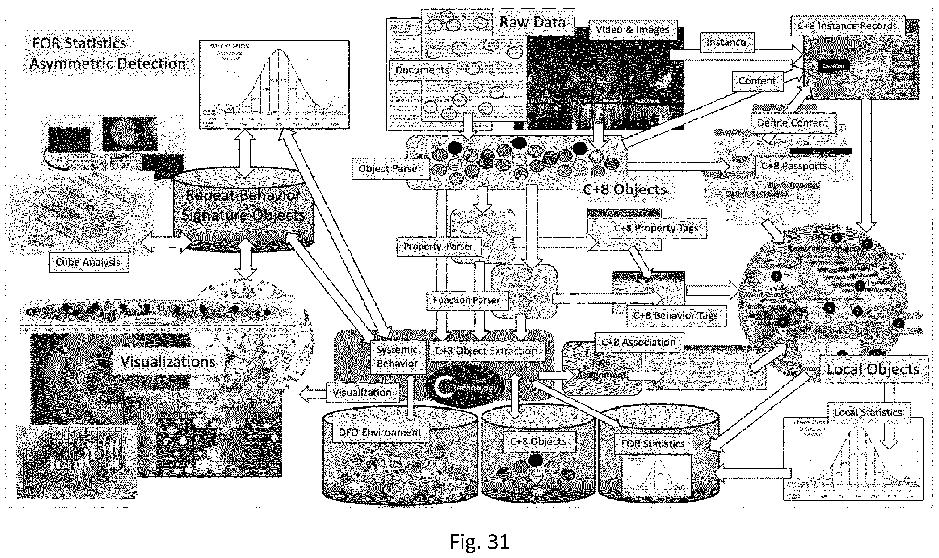

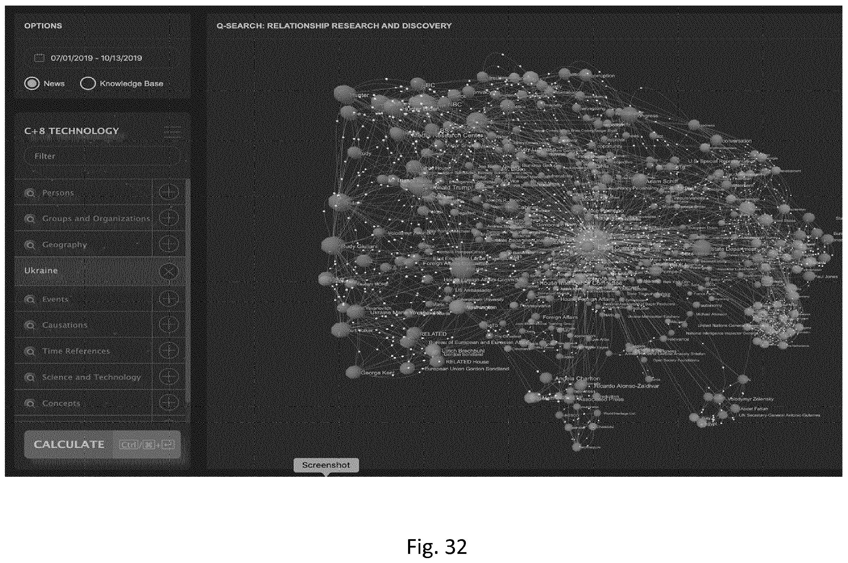

Refer to Fig. 31.

The next step of the method is to determine whether the identified common nouns (here "engine" and "blocks") are material things (real or perceived, including living or animate objects), and not persons or abstract concepts. To do this, we use Key Word in Context (KWIC), considering five (5) words to the right and five (5) words to the left of the common noun. This rule, of using five words in each direction, is not novel or claimed as part of this invention, but rather is generally known to experts in the field of textual analysis to be sufficient to reconstruct the original semantic context of the word in natural languages.

Also generally known to experts in the field is the "distributional hypothesis." This is the hypothesis that the meaning of a word can be inferred based on the context in which it appears. The majority of deep learning (neural net based) natural language processing methods use the distributional hypothesis to generate word vectors because these are task invariant as well as language invariant. The present method uses the distributional hypothesis for those reasons.

Based on the distributional hypothesis in studying word embedding in our text data, we assume that distributional similarity and meaning similarity are correlated. Thus, the context of the common noun that we observe is given by the co-occurring words. Statistical analysis and statistical testing of word co-occurrences are then used in word sense disambiguation, linking the common noun under study to a knowledge base of senses that the said noun can have. This method of disambiguation is well known to experts in the field of computational linguistics.

Next, based on KIWC and distributional analysis, we determine which of the candidate senses is the correct one, in context, and, provided that the textual fragment under consideration does not refer to a proper Named Entity, we assign the common noun to the C+8 Physical Object category.

To determine whether the textual fragment corresponding to the newly created knowledge object refers to a Person (and therefore is not considered a Physical Object), we use methods of Named Entity Recognition (NER) that are well known to experts in the field of computational linguistics. If the knowledge object is discovered by these methods to be a Person, it is not considered a Physical Object.

Refer to Fig- 32: Knowledge Object "Ukraine" created by a C+8 based query

Assignment of the noun to the Physical Object category means that the newly created knowledge object has a property corresponding to the discovery that it is a physical object.

The method of the present invention is to create a representational object in a computer database. One representational object is created for each common noun discovered in the text by the methods described above. A representational object has an address through which it can be referenced and modified, as well as a list of indefinite length that contain properties, instances, associations, and methods of the representational object. A representational object that has all of these as well as a specialized method and database for recording and controlling access to the representational object itself, is called a knowledge object.

The specialized method and database for recording and controlling access to the knowledge object is called a "passport". The passport of a knowledge object that is also a physical object contains a record of known instances (specific examples) of that knowledge object. For example, if the knowledge object represents an automobile, or car, the passport for that knowledge object will contain a list of pointers to various text articles that reference cars.

Each text object in the previous paragraph is itself a representational object, having been used as input to the system for processing text and previously recorded. However, these text objects, although they are representational objects, are not necessarily, and in general are not, physical objects. A counter example would be the plaque on the Statute of Liberty in New York, which both is a physical object and also contains text.

Utilizing the representational scheme set out in the present invention, we can perform highly sophisticated retrieval queries of the type:

```
 <Instruct:> <Resolve Query>;
 <Find range> of {local/regional} {Events}
 <organized> by {Persons} or {Groups}
 <with> a {Concept=Political Affiliation} of {Y} which <associate> under the
 {Concept} of {C} which taken place
 <between> {Time/Date} and {Time/Date} and {potentially}
 <with> {Probability}= {<80%} will <take place> till {Time/Date} <within> the
 {Geography}= {XXI} and/or {XX2}, which
 <involve>, (the {Event} + {Concept}= {A, C})
 <or> (the {Event} {Concept}= {B}), and <involving within> any qualifying
 {sub-event}
 {Persons} with a history of {Concept}= {D}, {not being Members} of {Group}=
 {G1 or G2},
```

and are either {Behaviour}:

```
 {Definition}={producing {and/or} marketing Products} of the range {Object}=
 {A, B, G}
 <cause> {function yx2} in {markets}, which <reside in> the {Geography}= {xyz-
 1}, {or} {Geography} = {xyz-2},
 <to> customers with a {profile/Behaviour} = {Y1, Y2 or Y3}" <Instruct:> <End
 Query>; <output result>
```

Described in the following is the complete the complete (C+8) Knowledge System. The C+ Knowledge System provides the following key aspects:
- Generalized Computational Process and Device or Devices to transform raw and unstructured data, or formatted and structured data, into functional computer software objects hereinafter referred to as Computational Prime Objects, which become organized into a finite set of classified and strictly generalized computational object classes, which are referred to in this patent as Prime-Object Classes
- Device or Devices applied in a strictly Generalized Computational Process to further define and transform such Prime-Object classified software objects, as defined in claim 1 through a fixed set of Classes of Causation into further Defined Computational Objects referred to as C+8 Objects, by creating as most centric objects those of Causality
- Method and Device or Devices to extract from Raw/Unstructured and Structured Data sufficient information to associate C+8 Objects, as defined through Claim 1 and 2, into Computational Objects of Instances, which furthermore transforming its underlying C+8 objects into Data Fusion Objects or DFO. A DFO can be be, and usually is found in many instances
- Method and Device or Devices to assign to all associative pairings of one or more Data Fusion Objects a unique IPv6 number, so that each Data Fusion Object becomes a Computational Network Object.
- Method and Device or Devices to calculate qualitative and/or quantitative statistical information from each (a) Computational Prime Object, (b) C+8 Object, (c) Computational Objects of Instance, and (d) Data Fusion Object, (e) Computational Network Object and preserve such information into the local code of each object dynamically, and update history and changes within each object, as more qualitative and quantitative information becomes known to the entire computational system environment over time.
- A interactive System of software and networked servers, and Program Devices, which organize and enable all processes and all devices from claim 1 to 5, to work together as a single holistic unit. This System is referred to in this Patent as the Quantum Relation Machine, or QRM
- Methods and devices to enable the Quantum Relation Machine to associate all objects from all previous claims to become a functional and interconnected abstraction of the real world with all its objects, changes, and interactive flows of information, to reenact therefore the causation of the real world dynamically by adding continuously data into the process in claim 1 to 5 and augment the real world information to become more precise and dynamic, the more data is added. The QRM has no theoretical limit in how much data it can manage, and is practically only limited by hardware and memory
- Methods and devices, which are native to the QRM, and enable a fully self-organizing data environment through the tools described in bullet points 1-5 above.

### 1. The Background and Reason why the C+8 Technology is urgently needed to solve Big Data Problems decisively

### i. Finding the Signal in the Noise

It's difficult to get insights out of a huge lump of data. In order to use Big Data, Data Scientist and author of the book "Social Network Analysis for Startups", Maksim Tsvetovat said* that "There has to be a discernible signal in the noise that you can detect, and sometimes there just isn't one. Once we've done our intelligence on the data, sometimes we have to come back and say we just didn't measure this right or measured the wrong variables because there's nothing we can detect here." He went on to say that in its raw form, Big Data looks like a hairball and scientific approach to the data is necessary. "You approach it carefully and behave like a scientist which means if you fail at your hypothesis, you come up with a few other hypothesizes, and maybe one of them turns out to be correct."

### ii. Data Silos

Data silos are basically Big Data's kryptonite. What they do is store all of that data a company has captured in separate, disparate units, that have nothing to do with one another and therefore no insights can be gathered from this data because it simply isn't integrated on the back end. Data silos are the reason you have to number crunch to produce a monthly sales report. They're the reason that C-level decisions are made at a snail's pace. They're the reason your sales and marketing teams simply don't get along. They're the reason that your customers are looking elsewhere to take their business because they don't feel their needs are being met and a smaller, more nimble company, is offering something better. The only way to eliminate data silos is, to Integrate data into a holistic approach.

### iii. Inaccurate Data

Not only are the data silos ineffective on an operational level, they are also fertile breeding ground for the biggest data problem: inaccurate data. According to a recent report, 75% of businesses believe their customer contact information is incorrect. If you have got a database full of incorrect customer data, you might as well have no data at all. The best way to combat inaccurate data is: Eliminating data silos by integrating data.

### iv. Technology Moves Too Fast

Larger corporations are more prey to data silos, for such reasons as they prefer to keep their databases on-premises, and because decision making about new technologies is often slow.

One example cited often is that stalwarts like telcos and utilities "...are noticing high levels of disruption from new competitors moving in from other sectors. In essence, traditional players are slower to move on technological advances and are finding themselves faced with serious competition from smaller companies because of this.

Big Data is also fast data. If one can obtain all the relevant data, analyze it quickly, surface actionable insights, and drive them back into operational systems, then one can affect events as they're still unfolding. The ability to catch people or things "in the act", and affect the outcome, can be extraordinarily important, valuable and disruptive."

The ability to make snap decisions and quickly move on Big Data insights is the advantage integrated data crunching models have over traditional silos.

### v. Lack of Skilled Workers

Based on several market studies, 37% of companies have trouble finding skilled data analysists to make use of their data. The best bet is to form one common data analyst team for the company, either through re-skilling your current workers or recruiting new workers specialized in big data.
You need to find employees that not only understand data from a scientific perspective, but who also understand the business and its customers, and how their data findings apply directly to them.

The inventive Solution: Data Integration under a new Data Model designed from ground up for Big Data

Data integration - or to be technical, data harmonization - is absolutely essential for getting the full advantage out of your Big Data. Data integration addresses the backend need for getting data silos to work together so you one can obtain deeper insight from Big Data.
Many people treat this topic as an afterthought-and that leads to security exposure, wasted resources, untrusted data, and more.
We must employ a new Big Data architecture with integration and governance in mind from the very start. Not only will this save the janitorial work that is inevitable when working with data silos and big data, it also helps to establish the fourth "V" - veracity. In other words, the trustworthiness of data, which will underpin the authority of any insight one can gain from analyzing data. In this context, Integration through uncompromised Generalization is the only technical solution Possible. It must be accomplished through a system, which lets the user find any answer inside his data instantly, without bias, and within a probabilistic framework for understanding its behavior in dynamic systems- data in motion leads to analysis in motion.

### 2. The three technical up to now unsolved problem domains the inventive C+8 Technology solves by design (below A-C):

### A. Finding deeply hidden facts and information in big data

In a polling, conducted in May and June of 2018, by the inventors, 11 international leading data experts where presented with this query below (Next Slide).

They were asked, if there was any known technology, which could resolve this query with a single input, given access to unlimited amounts of data and machine resources.

All experts answered without exception, that it was impossible for anyone to do this with a single request, using any known systems or tools, but rather to brake the task into many separate projects, to resolve the Query. In most or all cases, the tools would be unable to identify or process the meaning of the syntax (see below), the instruction content, or the required data elements within the available data pool.

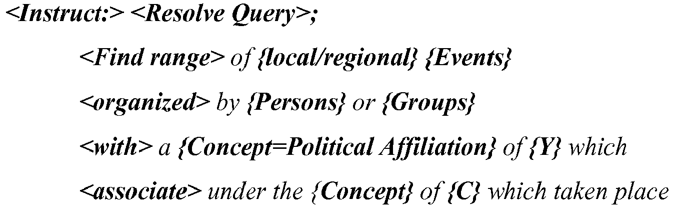

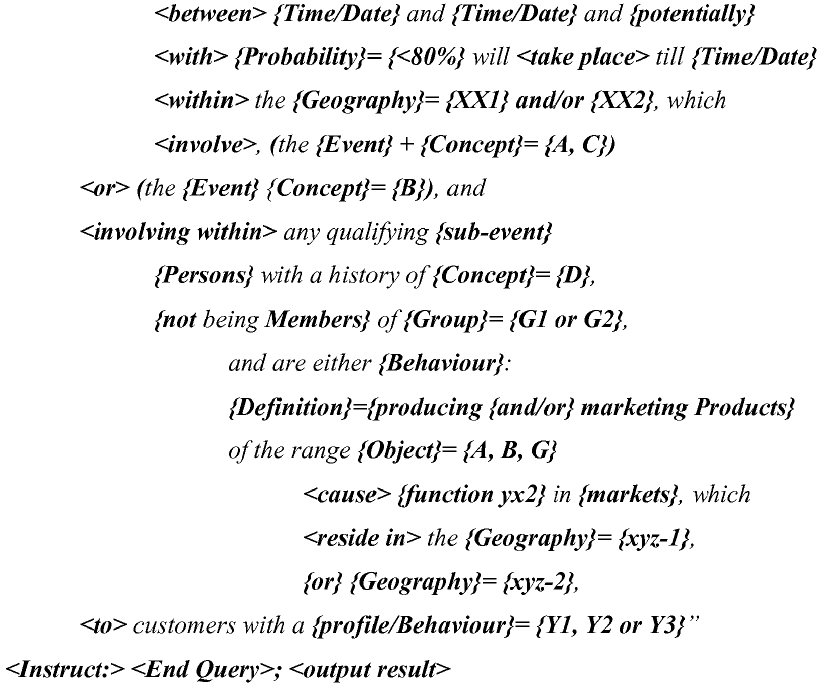

The above syntax included 1 Query; 49 Variables; 34 hard, 15 fuzzy conditions, multiple inclusions, multiple exclusions, and many complex dependencies.

Such query can only be solved, if there is a systemic approach, to collect and identify, and organize data through a holistic multi-dimensional process, where all data has a natural order and position within the information lake, which lets any information be found intuitively by the system, every time.

### B. Bias by design

Bias reflects critical features of experimental planning ranging from:
- the design of an experiment to support rather than refute a hypothesis;
- lack of consideration of the null hypothesis;
- failure to incorporate appropriate control and reference standards; and
- reliance on single data points (endpoint, time point or concentration/dose).

Of particular concern is the failure to perform experiments in a blinded, randomized fashion, which result in 3.2- and 3.4-fold higher odds, respectively, of observing a statistically significant result when compared to studies that were appropriately blinded or randomized. It is considered paramount that the operator, which is involved in data collection and analysis is unaware of the treatment schedule. How an outlier is defined and to be handled (e.g. dropped from the analysis), or what sub-groups are to be considered, must be established *a priori* and effected, usually before the study is un-blinded. Another important problem is the control of potentially confounding factors that can influence the outcome of a data analysis indirectly.

To solve all these problems, one must build a data analysis model, where all data interpretation is predefined through a generalized data classification model, to cut off all operator bias from any influence whatsoever.

### C. Data Silos

Data Silos are a problem for both simple and complicated analyses, yet, all big data lives in Data Silos.

When data sources are siloed, it is impossible under current technologies, to conduct a simple enterprise-wide search of content. If you do not know exactly which system has the information you need, or it is stored in multiple systems, you must manually search multiple systems to find the answers you are looking for, wasting valuable time. If you forget to check a key system, or you don't find every silo with relevant data, you will not have all the information you need to make the best possible decisions.

Silo data often contains duplicate information stored in individual siloes. When the same content is stored in disparate and unconnected systems, it's difficult to know which source to trust. Which version is the correct version? How do you choose? What are the consequences of making the wrong choice?

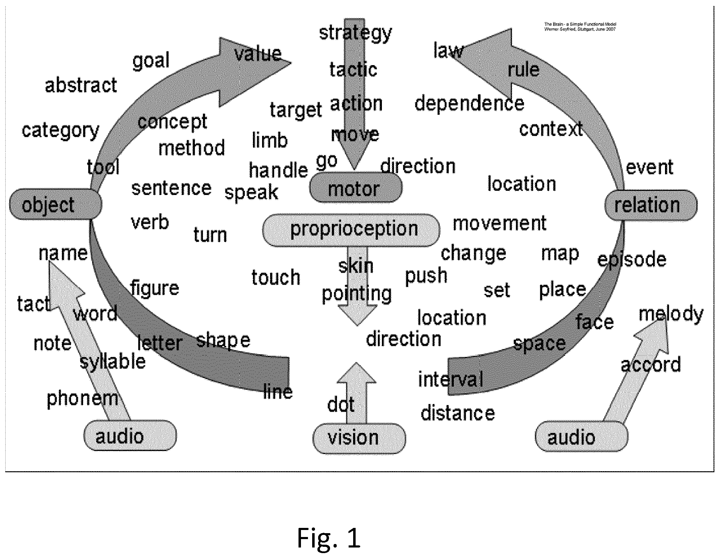

C+8 works just like a human brain only much more efficiently. Refer to Fig. 1.
- it is highly associative
- it accumulates qualitative and quantitative measurements and organizes them as individual objects of memory and records of sensations, which blend without boundaries through its associative neurons, to compare and merge these objects with other associative knowledge to larger contextual structures
- it memorizes information and memories as networks and associative sensations
- It understands objects initially and predominantly through comparative recognition of physical and causal features; object names only become a secondary shorthand in communication with others persons.

The nine Prime Operators of the C+8 Data Model

The C+8 Data Model is build around 9 fixed Prime Object classes. The C+8 data Model Causality (Causation) is the first Object Class and central to the data model, much in the same way, as causality is the most important element in astrophysics, quantum physics or information science.

### P1 Causation (Elements of Cause and Effect):

Why Causality in the C+8 Data Model?
The Extraction of Causality from Data is the single most important and most rewarding task in the pursuit of Intelligence. Understanding Causality builds the logic prime feature of all knowledge of complex dynamic change.
Causality is the relation between an event and a second event, where the second event is understood as consequence of the first. In common logic, Causality is also the relation between a set of factors and a phenomena. Causality is a prime feature to knowledge, and cannot be substituted, therefore centrally necessary, to understand especially big
Causality (also referred to as causation, or cause and effect) is the natural or worldly agency or efficacy that connects one process (the cause) with another process or state (the effect), where the first is partly or fully responsible for the second, and the second is partly or fully dependent on the first. In general, a process has many causes, which are said to be causal factors for it, and all lie in its past. An effect can in turn be a cause of, or causal factor for, many other effects, which all lie in its future. Causality is metaphysically prior to notions of time and space.
Causality is an abstraction that indicates how the world progresses. Causality is implicit in the logic and structure of ordinary language.

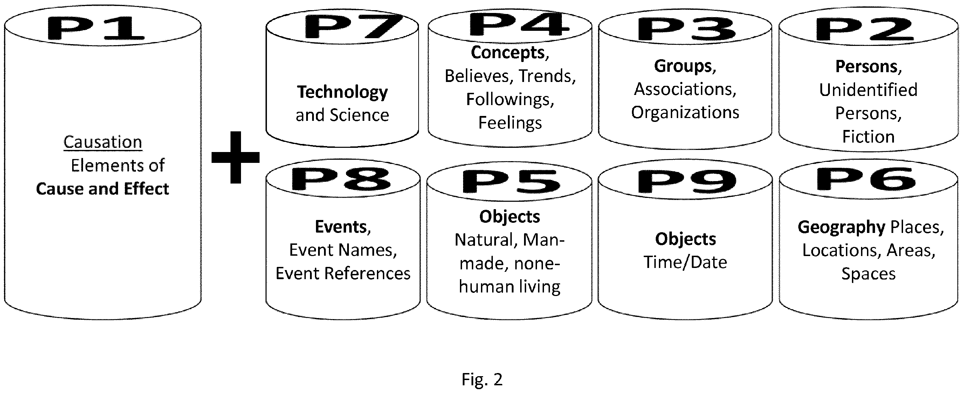

The nine fixed Prime Object classes of the C+8 Data Model are presented below, and explained below. Refer to Fig.2 which illustrates the 9 Prime Operators.

Whenever a object comes into existence for the first time, it will receive a permanent IPv6 number, by which it will be known from that moment onwards. The C+8 IP Server assigns these numbers automatically, when appropriate.

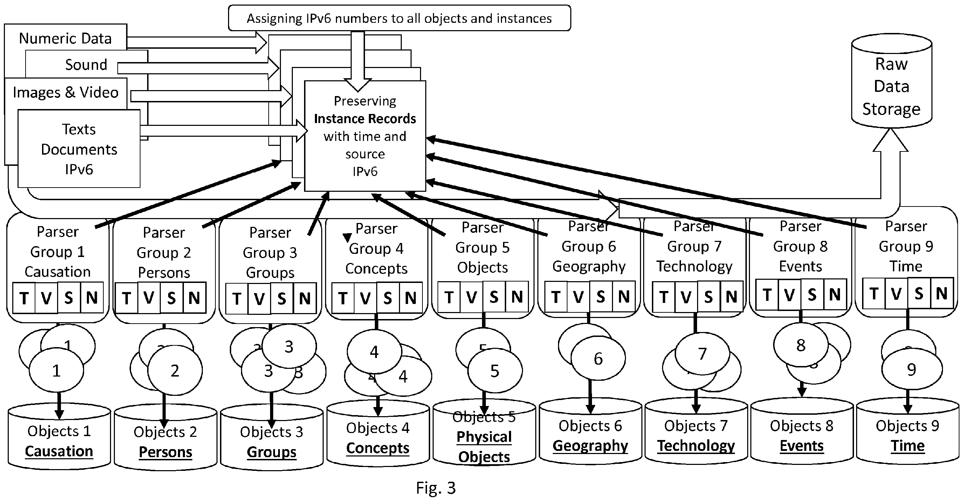

Fig. 3 illustrates Raw Data initial processing is Step 1.
(1) raw data is collected, time-stamped, and all source information is in all detail preserved
(2) Next Step is the parsing of the C+8 Class Objects from instances of raw data and of different data types. Raw Data Types are: Images, Text, Video, Sound and Numeric Data, or a composite of all or some of them (T, V, S, N)
Parsers work very different to extract C+8 objects from the various different types of (T,V,S,N) data, but they produce all the same type of object-outputs; the 9 object classes, which are in form of highly functional Data Fusion Objects (DFOs) with parser assigned IPv6 Number.
(3) The Ipv6 Numbers are automatically assigned to every prime-object and permanent record, and a log is produced to record the assignments

| ID | Name | Definitions for Objects as guide for extraction process by parsers | Color |
|---|---|---|---|
| P1 | Causation | Causality or Causation is the relation between an event and a second event, where the second event is understood as consequence of the first. In common logic, Causality is also the relation between a set of factors and a phenomena. Causality is a prime feature to C+8 knowledge management and cannot be substituted. Causality (also referred to as causation, or cause and effect) is the natural or worldly agency or efficacy that connects one process (the cause) with another process or state (the effect), where the first is partly or fully responsible for the second, and the second is partly or fully dependent on the first. In general, a process has many causes, which are said to be causal factors for it, and all lie in its past. An effect can in turn be a cause of, or causal factor for, many other effects, which all lie in its future. Causality is metaphysically prior to notions of time and space. Causality is an abstraction that indicates how the world progresses. Causality is implicit in the logic and structure of ordinary language. | Yellow |
| P2 | Persons | Any individual which is either human, or has human identification in some constructive way. Any human is therefore a person, but also Superman or Micky Mouse, | Red |
| | | which can be understood as a characters, living in a cartoon or movie world, but are seen through the lenses of personification and person-like features. | |
| P3 | Groups | Anything that groups together under a common concept, such as tribes, cultures and nations, but also organizations, such as companies, NGOs or Associations. Groups also occur in nature, such as a school of fish, a flock of birds, or a pack of wolfs. | Blue |
| P4 | Concepts | Concepts are mental building blocks by one or many persons or groups, which come in form of organizing ideas, plans of action, strategies, systematic realiza-tions of behavior and trends. Concepts can also be understood as ideologies, religions, feelings, believes, or creativity. Concepts lead normally to plans of implementation. | Purple |
| P5 | Objects | Anything, that has a physical footprint of any kind, is considered a object, except for humans. A object can be hard and touchable, such as a stone; a car; a book to read, or in form of gas and invisible, such as our air in the atmosphere. | Orange |
| P6 | Geography | A place anywhere. Typically used as geography in the traditional sense (a place on the surface of our planet), but as C+8 object, it can also be the surface of the sun, or the inside of someone's' pants pocket. Also, a abstract place such as Atlantis, or Heaven can be approached as a element of geography | Brown |
| P7 | Technology | Any object, method or strategy (strategy may overlap with concept) which came into existence by application | Grey |
| | | of some intelligence, to apply willfully a change onto a object, substance or otherwise definable target, with the purpose to enable such object or target, or to become more efficient, to perform some intended change either on the object itself, or to shape the behavior of another object to perform some intended task or function; primitive or sophisticated. | |
| P8 | Events | Anything that has a hard or fuzzy timeframe (a beginning and a end or transformation, which is the end of one and the start of a new event) which is bound to some set of location or locations, and which involved the change; evolution; transformation, unfolding of something, which can be recorded as history, story, anecdote, incident, occasion or record of what happened within a given time and place. | Green |
| P9 | Time | Any term, which can define a moment, or range of moments, past or future, precise or fuzzy, such as yesterday at 13:30 GMT or tomorrow morning. Dates are extension frames of time telling, and also considered time objects. | Black |

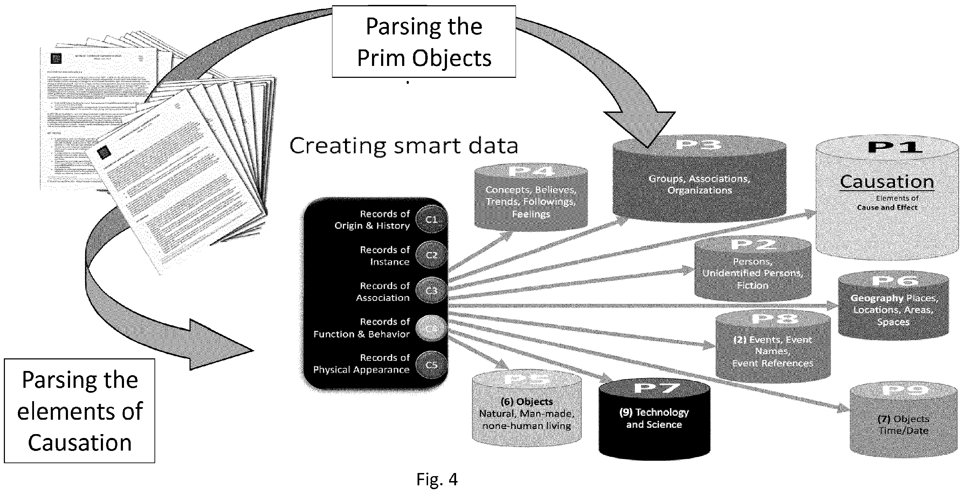

Fig. 4 illustrates Adding the 5 causation-classification-elements.

Each of the 9 Prime Objects are further augmented and defined through the 5 causation-classification-elements, all 9 prime objects are augmented, including the prime objects of Causality.

The 5 classifications of Causality are listed below.

| ID | Name | Definition | Representational Color |
|---|---|---|---|
| C1 | Origin and History | This record will be filled with all information about, where this object has been seen, with whom, and what instance reference. What this object caused in each known instance and from what source it was learned | Black/Yellow |
| C2 | Instance | Every record, in which a Object was described, mentioned, or implicitly observed, becomes a instance record inn the history of this object. Each instance is recorded, by logging all other objects which been present at such instance recording, including source of records, the person or machine causing the existence of such record, and all relevant time/date references. | Black/Red |
| C3 | Association | Each prime object in C+8 has a IPv6 number, which turns all elements of data into a network object with functional communication ports. Each association, either by instance, or any other means such as associative searches, calls, pings, or random poles, are recorded in the object's association | Black/Blue |
| | | records, including the exact circumstances under which such association took place, including time, date, request, and other log information. | |
| C4 | Function and Behavior | All observed or recorded information with respect to the functions or behaviors the actual object in the real world has, which becomes represented by a object in the C+8 object network, describing through language, pictures, videos or other media, the object's function, acting, behaving, influencing, changing of any kind, voluntarily, or involuntarily. Example: Lets say, the computational object is a "P5 Object" representing the physical Object 'Wood Chair,' then the associated function could for example be, 'supporting sitting' | Black/Purple |
| C5 | Physical Appearance | All observed or recorded physical features with respect to the object's shape, materials, size, weight, appearance, or colors. In the example of the chair, the description would be "wooden" and "shape of a chair," ect. | Black/Orange |

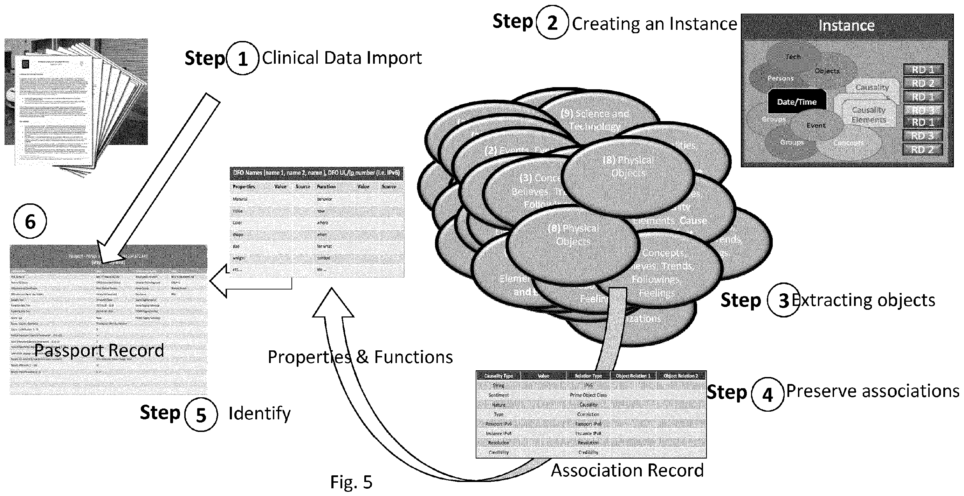

Fig. 5 illustrates further the initial C+8 Data mapping processing

### Step 1: Clinical Data Import

process documents and other data in real time (when it received or extracted from the source), and record exactly, where and when these documents appeared (source and time-stamping),..

### Step 2: Creating an Instance

Each incoming data unit (a document, a image, a video, a sound file, a numeric table) is a Source Instance. Each instance normally consists of multiple objects

### Step 3: Extracting objects

Specialized Parser programs extract from each data instance all identifiable Prime-Objects of the 9 C+8 Prime Object Classes,

### Step 4: Preserve associations

We record and preserve all associative relationships between all Objects of all of the 9 Prime Object Classes and elements of causation, which are found within any and each instance with respect to all C+8 objects inside the instance

### Step 5: Identify

In documents as well as in pictures, videos and radio broadcasts we can see, read, or hear objects described in the way they look (appear), what their form and shape is, or what materials they are made off. In many cases this information is explicit and in some it is an assumption (for example a object in the shape, appearance and colors of a work hammer is usually made from iron and wood).

In the following we use a short news story published by Reuters on 9 April 2018, to demonstrate some of the functions and how such objects are created
"Monday, 9 April 2018
Hydro denies Brazil alumina plant contaminated local environment Reuters Staff
OSLO (Reuters) - Aluminum producer Norsk Hydro denied on Monday that its Brazilian Alunorte alumina refinery had contaminated local waters, contradicting the findings of a Brazilian public health group.
Citing an internal study and a report commissioned from green consultancy SGW Services, Hydro said no evidence was found of overflow from its bauxite deposits or of any significant or lasting environmental impact. The company has previously admitted making some unregulated spills of untreated water, which it said was "completely unacceptable". Hydro reiterated on Monday that it would improve the plant's water treatment. Reporting by Joachim Dagenborg and Terje Solsvik, editing by Gwladys Fouche"

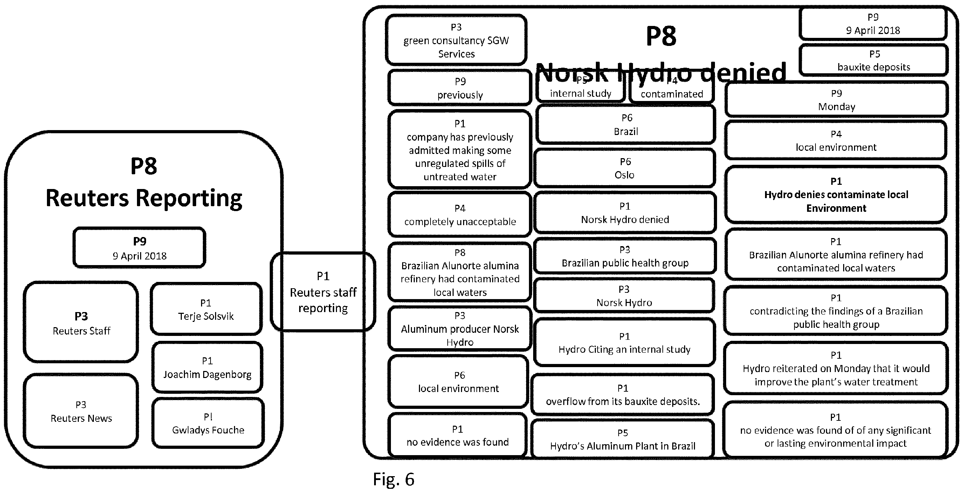

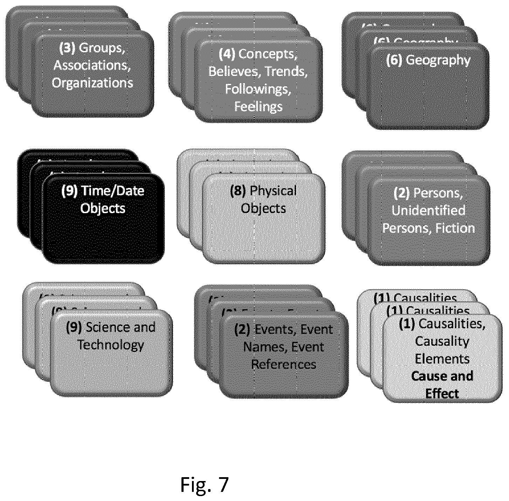

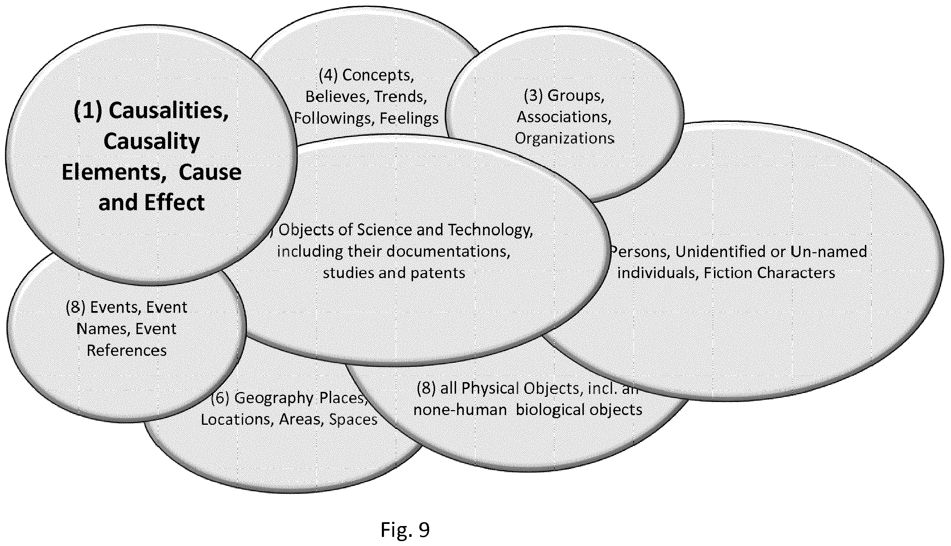

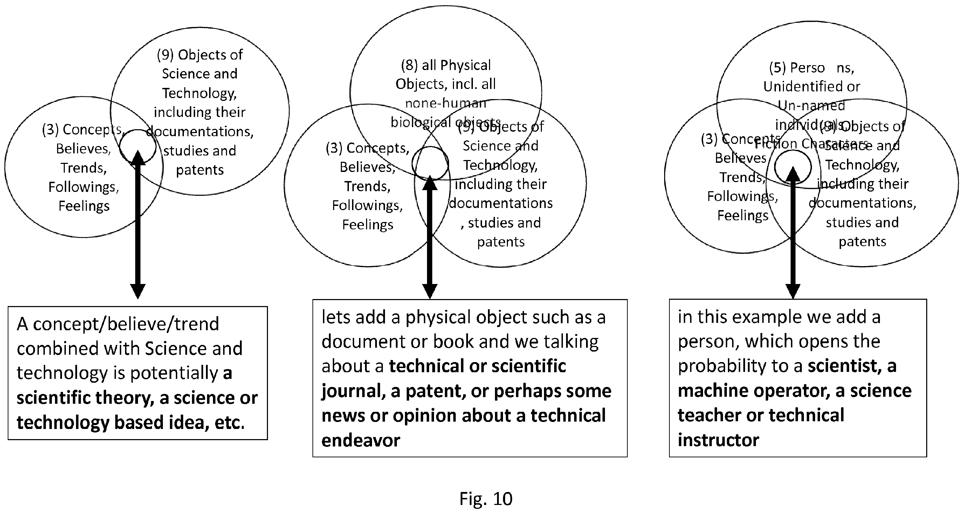

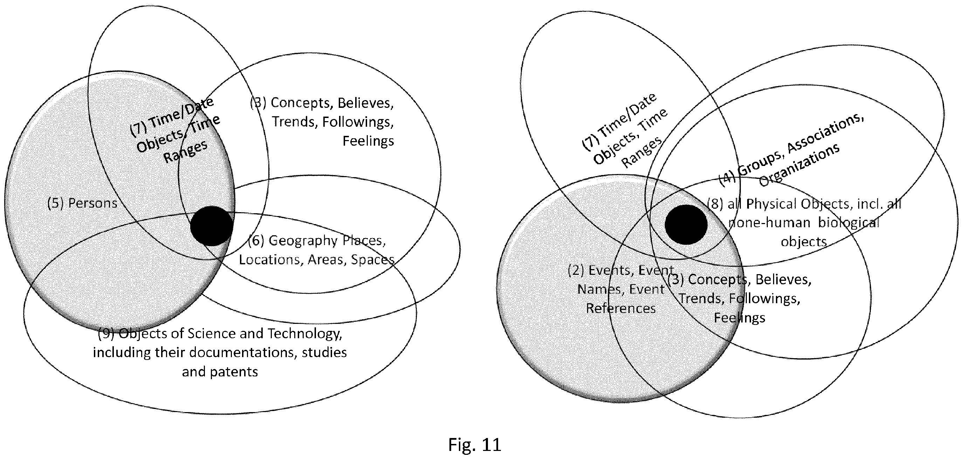

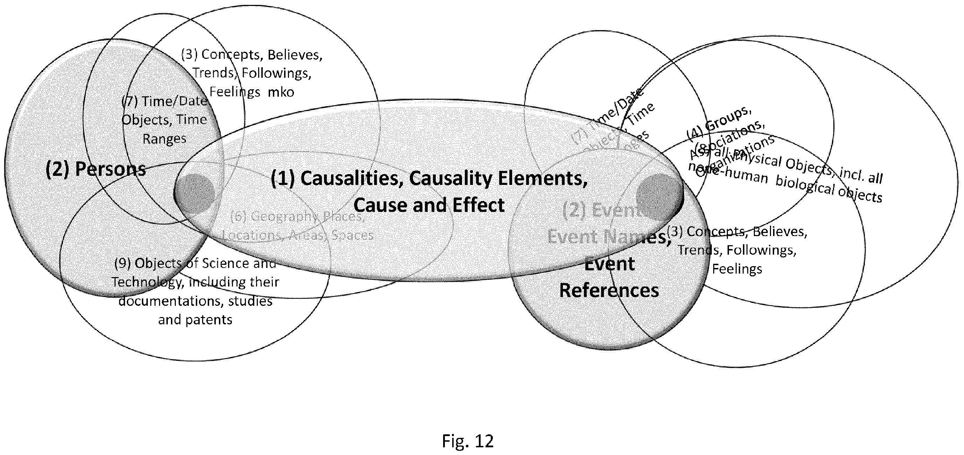

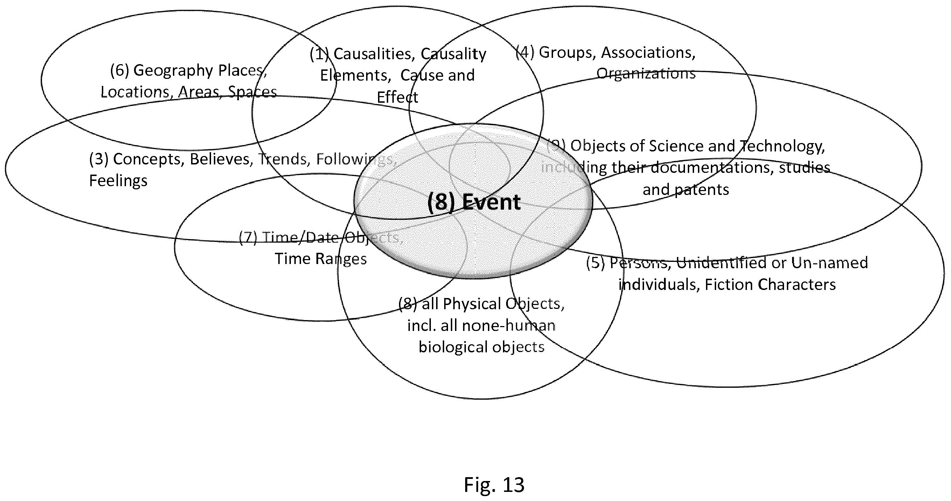

Fig. 6 illustrates the same story as instance in parsed C+8 Prime Objects
(1) Our first standard view of the computer based world representation according to the invention.

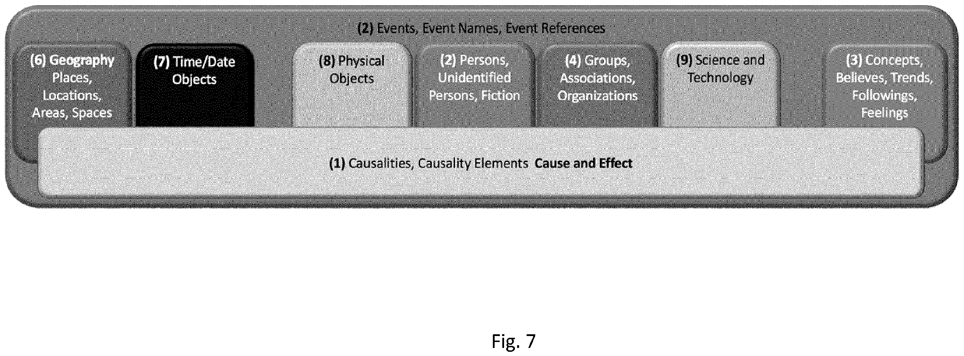

   Fig. 7 illustrates the Event-Time-Place-Story Elements.
   Lets call this View the "Storyteller View" because this is how we tell a Story through objects, and record, how our universe evolves, step by step. As we learn more about anything in our in terms where when what occurred, we can add such information naturally to the correct information Object and replace/sharpen in many cases statistical assumptions with learned facts.
   - There is an Event, there are references to Geography (where the event happened); there is time (when what happens), and together we could call this the Event Space;
   - There are elements, which play a roll in the event, such as Places, Objects, Persons, Groups of Persons, and always some form of Technology, which facilitates the event, and we could call this the Event Member Space;
   - There are also Ideas and Themes, which address the underlying event-related thinking, and we could call collectively all these Ideas and Themes amongst all Event Members the Concept Space;
   - There is also Causality, which explains or tells the *Story within the Event,* and the actions between the Members, and their respective Concepts. Lets call this the Causality Space.
   These 4 Spaces are 45-dimensional, with respect to the defining elements of causation, and they can be in part statistically presumed and in part observed through actual data
(2) The second Standard View of Computer based World Representation
   Lets call this View the Vertical View because this is how we record a object-centric view, focusing ONLY on the information belong to one individual object throughout every instance in which this object was present.
   Refer to Fig. 8.
   The World of Geography X
   The World of Time X
   The World of Object X
   The World of Person X
   The World of Concept X
   The World of Group X
   The World of Technology X
   The World of Event X
   The World of Causality X
   For example:
   lets look at One particular Minute of the Universe, and Everything which occurred within that minute.
(3) The molecular formation of Information elements and resulting networks
   Molecular information clusters are created through the parsing process of texts, pictures or videos. Refer to Fig.. 9. Causality has a special purpose in that it defines the chain of detected evolution steps of the involving objects, which are described in either the object-originating text, displayed in Video, or extracted in the inference of multiple images.
   How we refine (pre-filter, or narrow down) Knowledge Objects through Prime Object / Event / Instance associations and statistical comparative measurements ...
   With reference to Fig. 10, let's look at some examples.
   A concept/believe/trend combined with Science and technology is potentially a scientific theory, a science or technology based idea, etc. (Fig. 10, left part).
   lets add a physical object such as a document or book and we talking about a technical or scientific journal, a patent, or perhaps some news or opinion about a technical endeavor (Fig. 10, mid part).
   In this example we add a person, which opens the probability to a scientist, a machine operator, a science teacher or technical instructor (Fig. 10 right part).
   In C+8 knowledge is defined through complex Prime Object which share a common denominator.
   The left object cluster pegs person X, which is a research scientist for weather patterns to city Y on a specific date and time T
   The right object is a conference building in City Y with is hosting an event on Climate Change, with a group in conference room 4 waiting for sub-event "speech"
   How knowledge is defined through Prime Objects and Object Overlaps. Refer to Fig. 12. The causality Element is connecting these 2 objects:
   Now we know for example, that Person X is delivering the Keynote Speech on Climate Change in the Event of City Y, Convention Center, Conference room 4.
   C+8 delivers "Meaning" through the molecular formation of Information. Refer to Fig. 13. The First Prime Object is always the denominating element, all other objects become defining features of this first prime object. Information is now a complex but well structured and logic construct, defined through 8 additional prime objects, and all the elements of the 5 causation classes. This makes it very clear, compact and efficient, to describe a object with even 1000s of attributes and complex features.
4. The Information Technology of the C+8 System will be described below.

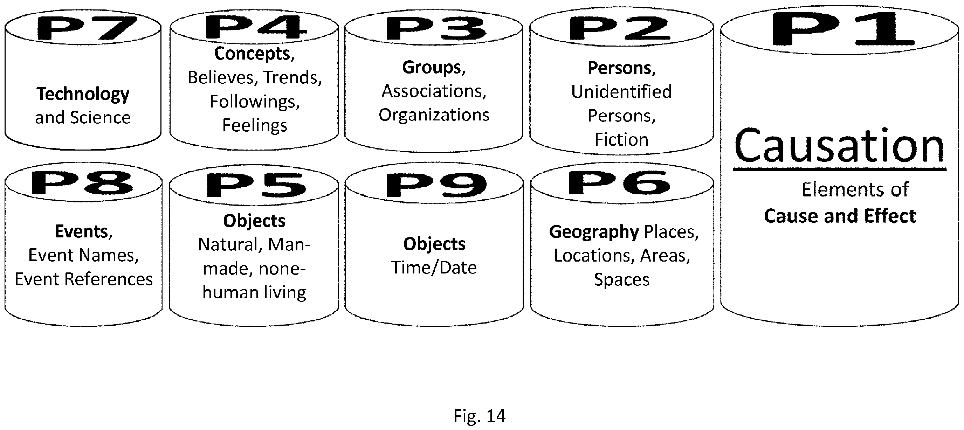

Using the 9 Prime Operators of the C+8 Data Model (refer to Fig. 14).

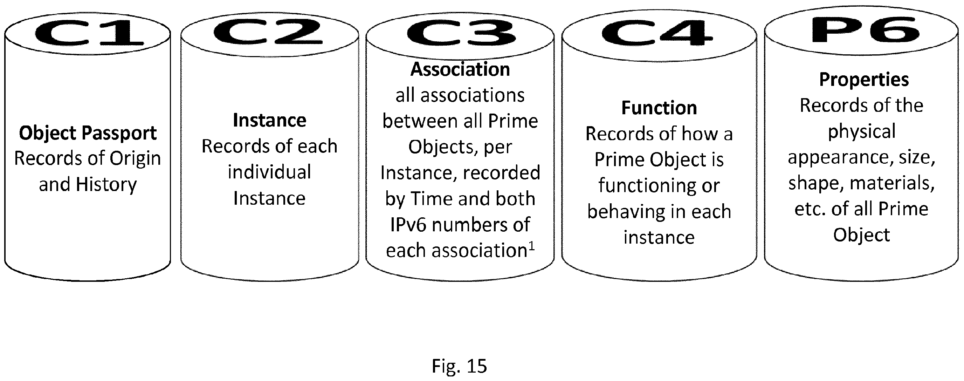

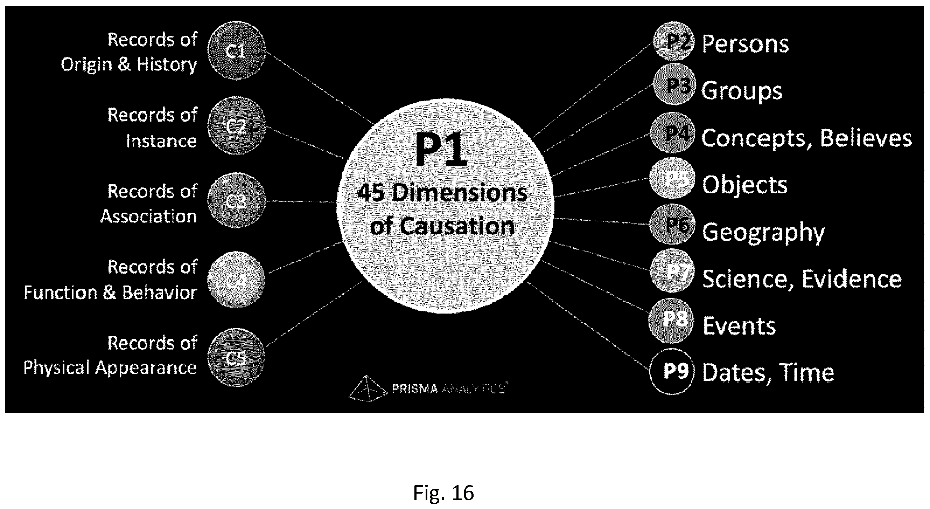

Using in conjunction to the 9 Prime Objects the 5 Causation Operator of the C+8 Data Model (refer to Fig. 15).

¹ Explanation of the Association Model in C3 of Fig. 15: The object <Man> in {instance} X is automatically associated with all other Prime Objects of the same {Instance} such as <House>, <Garage>, <Car> and <Dog>. Each object has a Ipv6 number. Therefore there is a association expressed through IPv6 numbers between {Man - House} {Man - Garage} {Man - Car} {Man - Dog}. The {Instance} has its own IPv6 and is therefore the shell of this particular association cluster. A instance can be a <Prime Object> of another {instance}

When we parse raw data into C+8 data objects, we preserve, how reality unfolded, according to the data analyzed. The objects on the left side (CI to C5) indicating the associative records of causation for each and all prime objects (PI to P9). They indicate the object selection, time, place, event, physical properties, and behavior of, and between all prime objects within each instance. In this way we enable information objects to become dynamic elements of streams of events or state conditions extracted from our data. We can reconstruct reality, insofar as it has been recorded in written or otherwise captured information. Refer to Fig- 16.

In connection with the following Figures, we will explain the technical step by step process and implications with respect to big-data processing

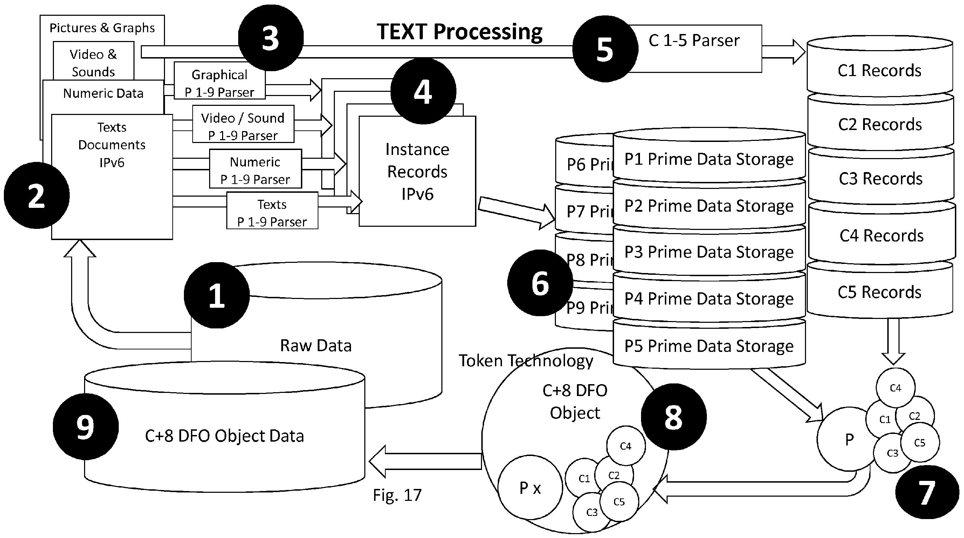

TEXT Processing is illustrated in Fig. 17. The steps ae described in the table below.

| Step | Process |
|---|---|
| 1 | Raw Data I harvested and separated by type, time=stamped and format, and then stored for processing in step 2 |
| 2 | Data is analyzed for application of the most appropriate Parser Selection (text, tables, video, audio, images), and send to be processed into individual C+8 Prime Objects (PI - P9) and associated Causation Objects (CI - C5) |
| 3 | The parsers extract the Prime Objects from raw data. The same object can be parsed or identified as a different prime Object (for example: WW2 can be a Time, Event, Concept, Causality, or even a Geography), depending on, in which context the object is appearing in the data; and more then one object parser can claim it in one instance ¹ |
| 4 | All Prime Objects from the same media (a document, or a picture, video, etc.) is grouped to a 'Instance.' The same Object can (and in most cases will) occur in many different instances, even in a different object class (see Step 3). |
| 5 | The C1-C5 Parser is extracting from raw data causation information and writing to the appropriate information elements (C 1 to C 5 records) inside the Prime Object. |
| 6 | The Instance information is generated by extracting all Prime Objects and recording them with all its contextual and associative external root information, incl. Date, Time, Location, Source, Author, etc.. |
| 7 | the Prime Objects are now augmented on a per instance bases with the appropriate C1-C5 causation objects, and unified to a inclusive and fully optimized prime object |
| 8 | The prime object is incased in token technology to become a complex DFO (Data Fusion Object) which is identifiable externally through a C+8 DNA code for fast search and access |
| 9 | Object is implanted into life transaction environment |

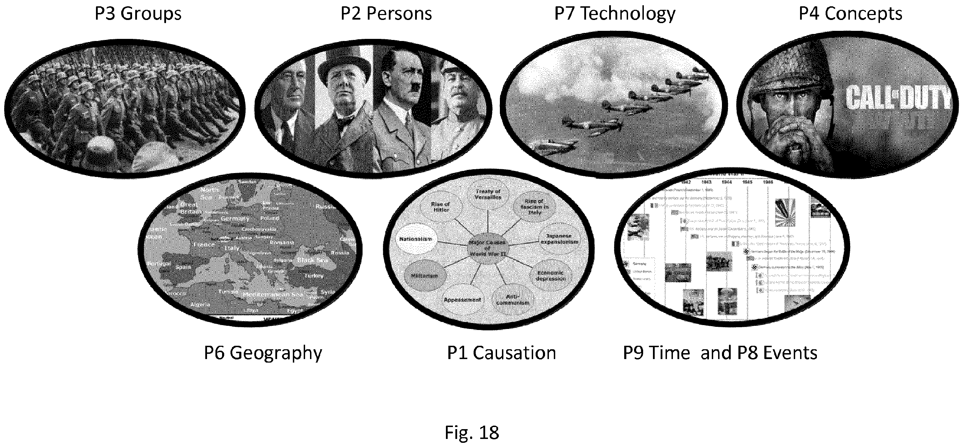

1 As to step 3, the process of object identification is mapped in such way, to capture and understand reality, its dynamics and implications at each moment and each separate instance, which can make the identical object appear as different object class, and naturally with different causation elements. As the later should be expected, the first is, what opens the gateway to something, which is called "meaning" in human's conscious understanding or comprehension of things within situational awareness or conceptual thinking. It is therefore very important, that the parsing technology applied in the C+8 process is of such quality and and sophistication, that these differences can be trapped and preserved in the parsing process. This is true for linguistic analysis, as well as for the analysis of Images, Videos, or Audio media. In Fig. 18 examples of how this applies in practice are given. The images are of a search for the {Object WW2}.

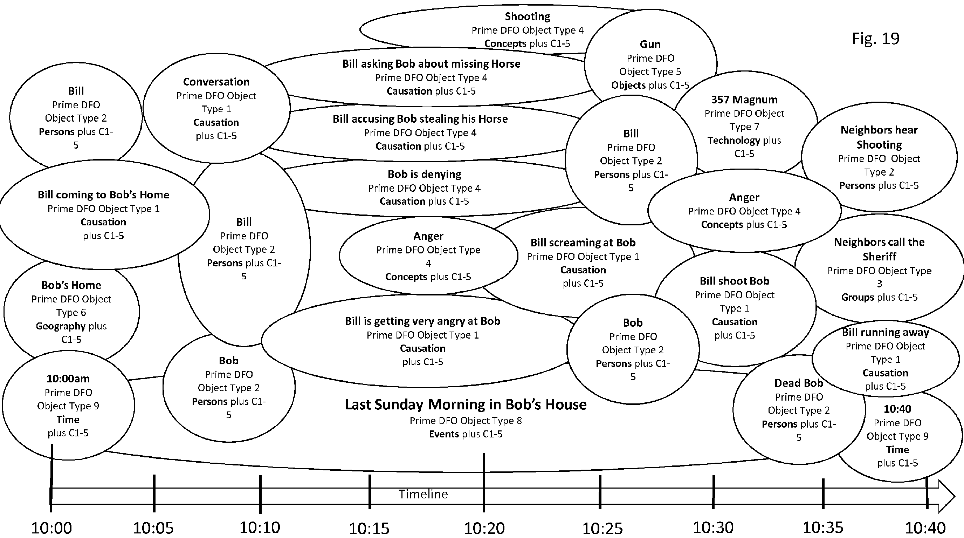

By creating an environment, where we can load the rich content of interpretation and understanding into a common data model, we are moving well beyond the constrains of classic metadata, and begin to capture multidimensional and fully associative composite objects, in which we preserve time and information entropy to such degree, that we can re-enact, how reality unfolded, provided we capture enough data; refer to Fig. 19 as example.

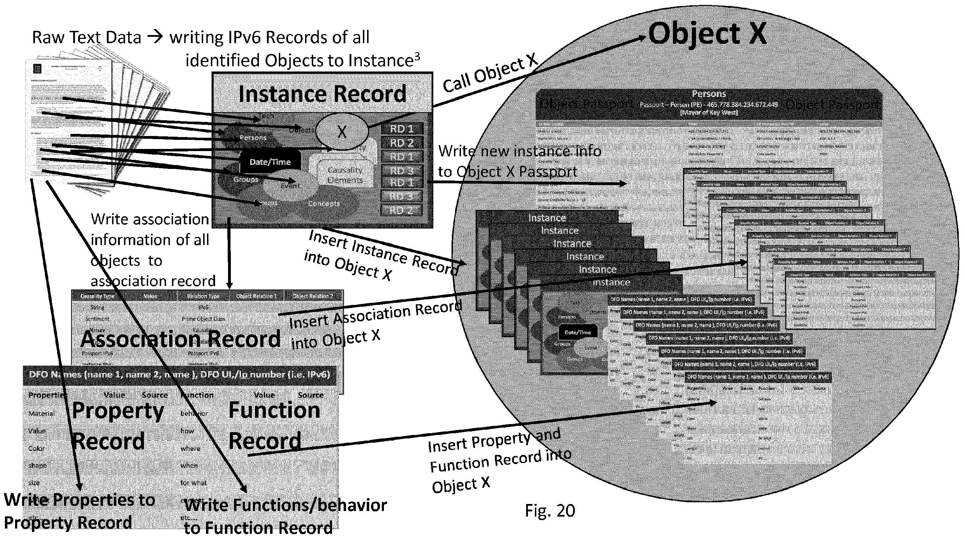

2 The Data Records and write process of a Prime Object DFO is illustrated in Fig. 20.

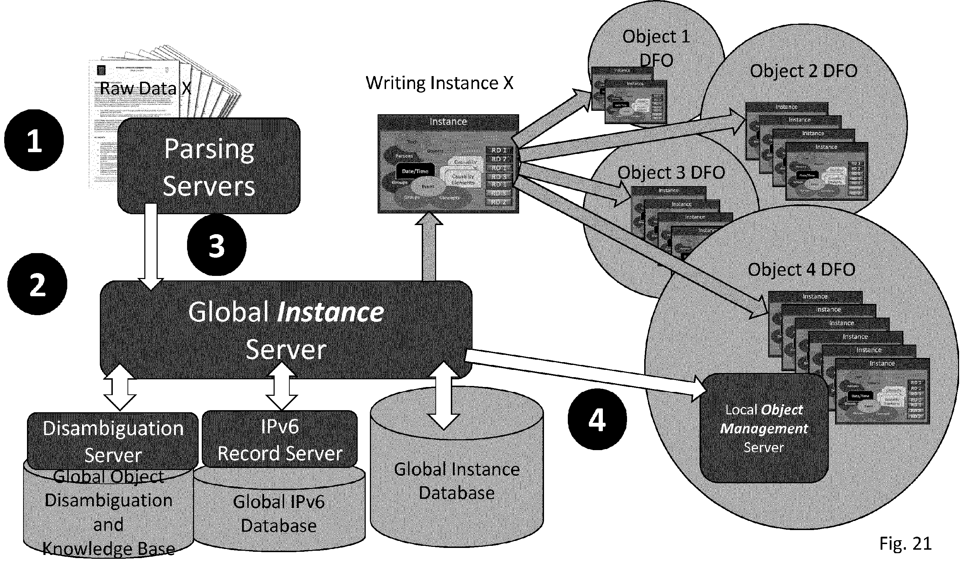

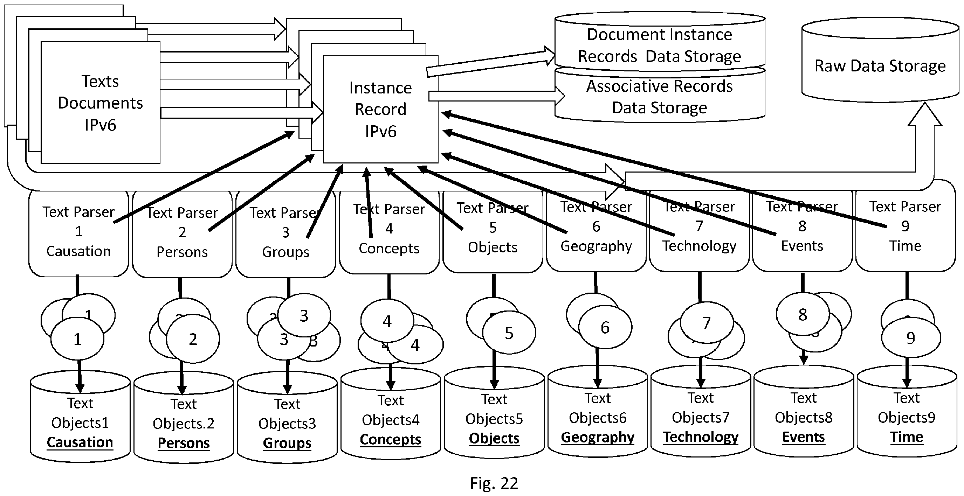

3 How the Instance function works is illustrated in Fig. 21 and Fig. 22.
1: Parsing Server reports all objects found in a raw data container (i.e. document, etc.) to Global Instance Server.
2: Global Instance Server is disambiguating the objects and checks for pre-existing IPv6 records.
3: Instance Server writes new Instance X, assigns new IPv6 address to instance.
4: Instance Server is calling the local management Server in each Object and inserts Instance Record into each object recorded in the instance.

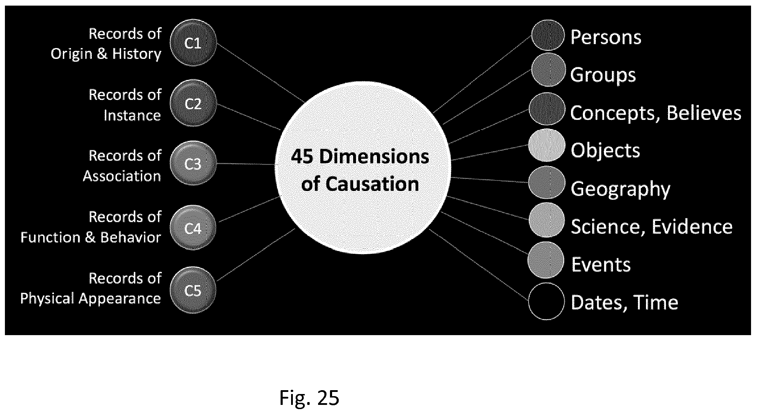

### Summary (refer to Fig. 23):

The C+8 Data Model and its 9 Prime Object Elements are bound by the central element of Causation.

This strict configuration of cognitive engineering is what powers the ability to extract knowledge contained in the logic and structure of ordinary language.
The C+8 Prime Elements are: Events Concepts Groups People Objects Time Geography Technology.

Each and every object of human awareness can be classified and sorted into one or more of the C+8 Prime Elements, providing the basic framework for Prisma's powerful generalized C+8 Data Model.

Causation is what drives the accumulative knowledge capabilities of the QRM, because it enables a systematic approach to generating new knowledge based on existing knowledge.

Causation is the association made between one event and a second event, whereby the second event is understood to be a consequence of the first. Human cognition naturally organizes knowledge according to relations of cause and effect. It is one of the foundational concepts that renders the empirical world comprehensible to humans.

The C+8 Data Model is a dynamic identification, classification and categorization structure that parses features of raw data into associative, quantitative and qualitative data objects centered around the element of Causation. C+8 data objects, are then stored and consequently fixed as generalized data objects in the ontological layers of the QRM architecture.

C+8 data objects are not stand alone static elements limited to one simple instance of discovery. C+8 data objects are highly complex, evolving, relational knowledge elements that are captured and stored along with their complete associative histories.

As each new instance of information enters the C+8 environment, new C+8 objects are created and existing C+8 data objects are updated, recording their new-found properties, locations, behaviors. But most importantly, with each new instance of information, newly discovered connections based on Causation emerge between C+8 objects already recognized by the system. This creates a perpetually evolving, intricate web of understanding that can be broken down into simple parts and easily accessed through various visualization technologies.

Recreating the real world inside the Machine with the C+8 Data Model

C+8 solves the fundamental need of creating a laboratory environment, which reproduces the real dynamic world
This segment of slides is dealing with the native ability of C+8 to write the dynamic reality into 4-space and continuously use it, update it and use AI to extract hidden answers inside the data, which resemble the actual conditions, problems, solutions and changes found in the real world.
In our Model, the quality of the 'abstraction of reality' (the computer based dynamic copy of the real world) is linked and depending on the quality, volume and density of information one can get to feed the abstraction. The more Data one imports into the C+8 system, the more realistic the model becomes over time. More big data is better, as opposed to legacy systems, where the adding of big data creates a more negative effect over time.

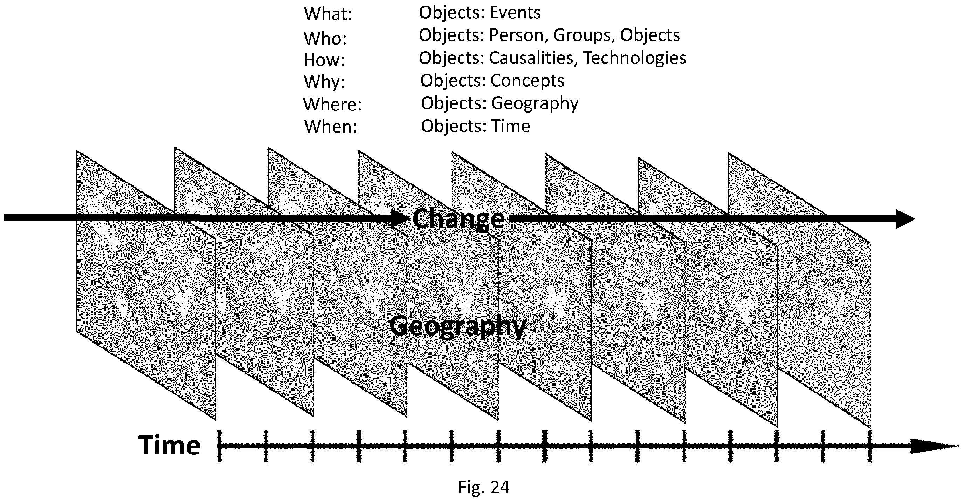

C+8 serves a multi-universe view of its information, to give options from which perspective users to approach the real world
The C+8 model is growing and existing through the billions of small inserts the system is performing hour after hour through its data parsing software. The system is self-organizing by nature, and information can be recalled in any organizational approach the operator wishes to use. For example, the user can use a physical world view arranged around geographical and physical features. However, other system views can be used, such as political, economic or scientific organizational views, or a mix of any of them, without loosing any systemic connection, since all views, including contradictory views of the world integrate seamlessly.
Examples described with Fig. 24, Fig. 25, and Fig. 26.

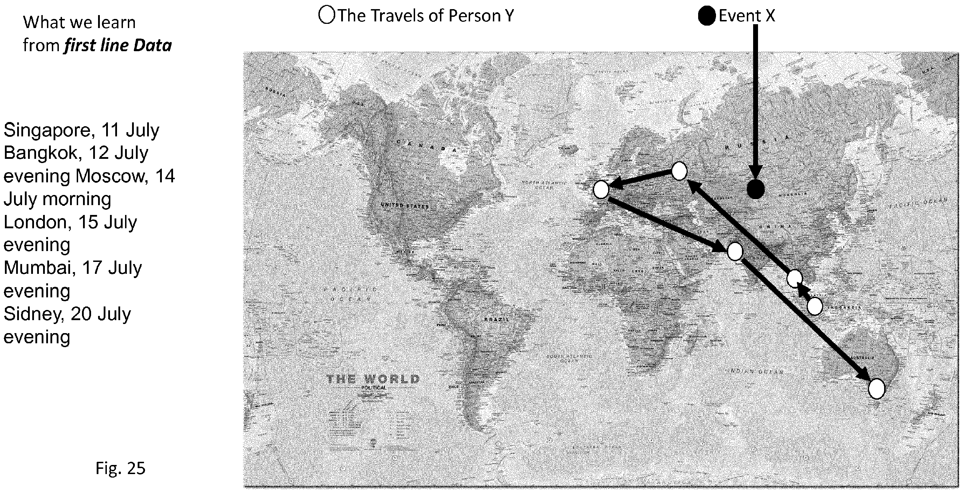

C+8 Enables the tracking of any set of Objects through time, taking qualitative and quantitative measurements at each instance of recording, refer to Fig. 24, and Fig. 25.

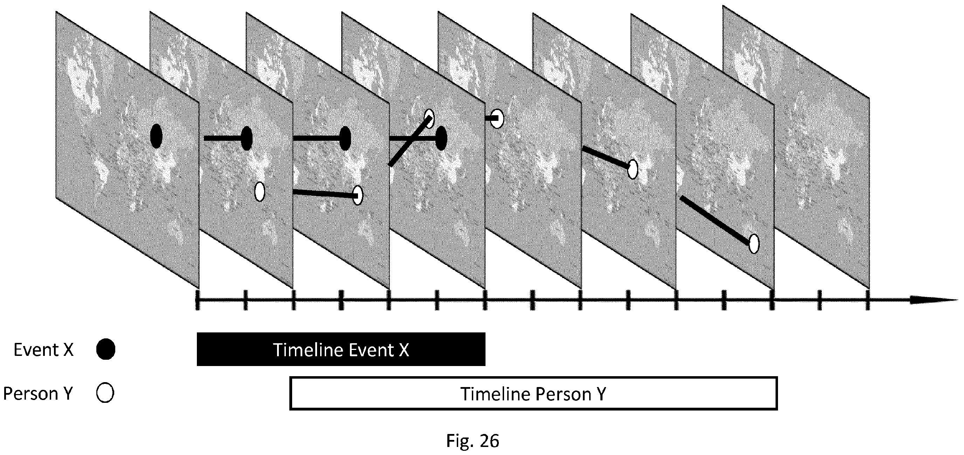

Objects become strings in space-time, either fixed in geographic location, or moving to different positions, if the object changes location, refer to Fig. 26.

## Claims

1. A computer-implemented method for big data analysis and identifying semantics in heterogeneous raw data, comprising the steps of:
- harvesting raw data and separating the data according to type, time-stamp and format;
- analyzing the harvested data and applying a most appropriate parser selection for processing the harvested data to form individual prime objects and/ or causation objects, wherein the same object can be parsed as different prime objects, depending on a context the object is appearing in;
- grouping all prime objects from the same raw data media as an instance, wherein the same prime object can occur in several different instances;
- extracting causation objects from the raw data and assigning the causation objects to the respective prime object;
- generating instance information by extracting all prime objects and recording them with all their contextual and associative external root information; and
- incasing the prime objects in token technology to become a complex data fusion object, which is identifiable externally through a code for fast search and access.

2. The method according to claim 1, **characterized in that** parser selection is performed as a function of a presence of the raw data as text, tables, video, audio and/ or images.

3. The method according to claim 1 or 2, **characterized in that** parsing involves natural language processing, text mining techniques and/ part of speech analysis.

4. The method according to any one of the preceding claims, **characterized in that** parsing comprises at least one of applying a graphical parser, a video/ sound parser, a numeric parser and/ or a textual parser.

5. The method according to any one of the preceding claims, **characterized in that** each prime object and/ or data fusion object is assigned an IPv6 address.

6. The method according to any one of the preceding claims, **characterized in that** the root information is formed by a date, a time, a location, a source and/ or an author.

7. The method according to any one of the preceding claims, **characterized in that** a causation object may be formed by an origin and history, an instance, an association, a function and behavior and/ or a physical appearance.

8. The method according to any one of the preceding claims, **characterized in that** a prime object may be formed by a group of further prime objects.

9. The method according to any one of the preceding claims, **characterized in that** a prime object may be formed by a hard or fuzzy timeframe.

10. The method according to any one of the preceding claims, **characterized in that** causality is a relation between an event and a second event, wherein the second event is a consequence of the first.

11. The method according to any one of the preceding claims, **characterized in that** a prime object may represent a person, a group, a concept, an object, a geography fact, a technology, an event and/ or a time.

12. The method according to any one of the preceding claims, **characterized in that** the complex data fusion object is inserted into a living transaction environment.

13. System arrangement for big data analysis and identifying semantics in heterogeneous raw data, comprising:
- a harvesting unit arranged to harvest raw data and separate the data according to type, time-stamp and format;
- an analyzing unit arranged to analyze the harvested data and apply a most appropriate parser selection for processing the harvested data to form individual prime objects and/ or causation objects, wherein the same object can be parsed as different prime objects, depending on a context the object is appearing in;
- a grouping unit arranged to group all prime objects from the same raw data media as an instance, wherein the same prime object can occur in several different instances;
- an extraction unit arranged to extract causation objects from the raw data and assigning the causation objects to the respective prime object;
- a generation unit arranged to generate instance information by extracting all prime objects and recording them with all their contextual and associative external root information; and
- an incasing unit arranged to incase the prime objects in token technology to become a complex data fusion object, which is identifiable externally through a code for fast search and access.

14. A computer program product comprising instructions to cause the arrangement of claim 13 to execute the steps of the method of any one of claims 1 to 12.

15. A computer-readable medium having stored thereon the computer program of claim 14.
